Europäisches Patentamt

(19) European Patent Office

Office européen des brevets

(11) EP 0 786 285 A2

(12) EUROPEAN PATENT APPLICATION

(43) Date of publication:
30.07.1997 Bulletin 1997/31

(51) Int. Cl.⁶: $B01D\ 53/94$, $B01J\ 21/06$, $B01J\ 23/38$

(21) Application number: 97101390.9

(22) Date of filing: 29.01.1997

(84) Designated Contracting States:
DE FR GB

(30) Priority: 29.01.1996 JP 12916/96

(71) Applicant: KABUSHIKI KAISHA TOYOTA CHUO KENKYUSHO
Aichi-gun Aichi-ken, 480-11 (JP)

(72) Inventors:
• Suzuki, Kenichirou,
c/o K. K.Toyota Chuo Kenkyusho
Aichi-gun, Aichi-ken, 480-11 (JP)

• Tuji, Ryusuke,
c/o K. K.Toyota Chuo Kenkyusho
Aichi-gun, Aichi-ken, 480-11 (JP)
• Sugiura, Masahiro,
c/o K. K.Toyota Chuo Kenkyusho
Aichi-gun, Aichi-ken, 480-11 (JP)

(74) Representative: Blumbach, Kramer & Partner
Patentanwälte
Radeckestrasse 43
81245 München (DE)

(54) Exhaust gas purifying catalyst, and method for purifying exhaustgas

(57) An exhaust gas purifying catalyst for removing at least nitrogen oxides from oxygen-rich exhaust gas has a composite oxide support that comprises at least two elements selected from Ti, Zr and Si, and a noble metal loaded on said composite oxide support. An exhaust gas purifying method has an adding step of gas oil as a reducing agent. The composite oxide support has more acid points than alumina and the like, and this adsorbs $NO_x$ on its acid points. The thus-adsorbed $NO_x$ is reduced with a reducing agent through the catalytic activity of the noble metal on the catalyst, and removed from exhaust gas. The catalyst is effective for inhibiting the oxidation of $SO_2$ in exhaust gas. The addition of a reducing agent such as gas oil to the catalyst enhances the reduction of $NO_x$ in oxygen-rich exhaust gas which contains oxygen not less than the amount of oxygen necessary for oxidizing the components to be oxidized in the exhaust gas, thereby promoting the removal of $NO_x$ from the gas.

EP 0 786 285 A2

**Description**

BACKGROUND OF THE INVENTION

FIELD OF THE INVENTION

The present invention relates to an exhaust gas purifying catalyst for purifying exhaust gas emitted from internal combustion engines used in, for example, cars, and to a method for purifying such exhaust gas. More precisely, it relates to an exhaust gas purifying catalyst capable of efficiently reducing nitrogen oxides ($NO_x$) even in oxygen-rich exhaust gas or, that is, exhaust gas that contains oxygen not less than the amount of oxygen necessary for stoichiometrically oxidizing reducible components existing therein, such as carbon monoxide (CO), hydrogen ($H_2$) and hydrocarbon (HC), thereby purifying the exhaust gas, and also relates to a method of using the catalyst for purifying exhaust gas.

DESCRIPTION OF THE RELATED ART

As exhaust gas purifying catalysts for cars, heretofore employed are three-way catalysts which oxidize CO and HC, while reducing $NO_x$, to thereby purify exhaust gas. One typical example of such three-way catalysts comprises a porous support layer of, for example, $\gamma$-alumina as formed on a heat-resistant substrate comprising, for example, cordierite, in which the porous support layer carries a catalytic noble metal, such as platinum (Pt), rhodium (Rh) and the like. Also known is a three-way catalyst with increased low-temperature activity, comprising ceria (cerium oxide) with oxygen-storage.

On the other hand, recently, carbon dioxide ($CO_2$) in exhaust gas emitted from internal combustion engines in cars and the like has become considered problematic from the viewpoint of the protection of the global environment. "Lean burn" to be effected in an oxygen-rich atmosphere is considered to be effective to solve this problem. In such lean burn, the amount of fuel to be consumed is reduced, whereby the amount of $CO_2$ in exhaust gas can be reduced.

However, since the conventional three-way catalysts purify exhaust gas by simultaneously oxidizing and reducing CO, HC and $NO_x$ in exhaust gas at a stoichiometric air-fuel ratio, they can not exhibit the sufficient purifying ability to reduce $NO_x$ in oxygen-rich atmosphere. Therefore, it is desired to develop a catalyst and a purifying system capable of reducing $NO_x$ even in oxygen-rich atmospheres.

Given the situation, we, the present inventors have previously proposed an exhaust gas purifying catalyst comprising an alkaline earth metal and Pt loaded on a porous support such as alumina (see Japanese Laid-Open Patent Publication No. 5-317652), and an exhaust gas purifying catalyst comprising lanthanum and Pt loaded on a porous support such as alumina (see Japanese Laid-Open Patent Publication No. 5-168860). Using these exhaust gas purifying catalysts, $NO_x$ may be adsorbed in the alkaline earth metal oxide or the lanthanum oxide ($NO_x$ absorbent) therein at an air-fuel ratio higher than the stoichiometric air-fuel ratio (i.e., a lean air-fuel ratio), while it may react with other reducible components such as HC and CO that may be formed in the transient zone at a stoichiometric air-fuel ratio or an air-fuel ratio lower than the stoichiometric one (i.e., a rich air-fuel ratio), thereby purifying exhaust gas. In that manner, therefore, the exhaust gas purifying catalysts proposed may exhibit excellent purifying capacity for removing $NO_x$ even in a lean burn condition.

In Japanese Laid-Open Patent Publication No. 52-122293, disclosed is a catalyst for reducing and removing nitrogen oxides through catalytic reaction with ammonia, which comprises a component (A) of a binary oxide of titanium (Ti) and silicon (Si) and/or a ternary oxide of Ti, zirconium (Zr) and Si, a component (B) of at least one selected from the group consisting of vanadium (V), tungsten (W), molybdenum (Mo), uranium (U), copper (Cu), iron (Fe), chromium (Cr), manganese (Mn) and cerium (Ce), and a component (C) of at least one selected from the group consisting of tin (Sn), zinc (Zn), lead (Pb), Ti, Zr, nickel (Ni), cobalt (Co), niobium (Nb), tantalum (Ta), phosphorus (P), boron (B), bismuth (Bi), antimony (Sb), alkali metals and alkaline earth metals.

Exhaust gas contains sulfur dioxide ($SO_2$) to be formed through combustion of sulfur (S) existing in fuel. $SO_2$ is oxidized with a catalytic metal in a lean burn condition to be converted into $SO_3$, which is then reacted with steam to give sulfites and sulfates.

Many conventional exhaust gas purifying catalysts such as those mentioned hereinabove comprise, as the support, an activated alumina with high adsorbability, in which, however, the activated alumina support easily absorbs sulfur oxides ($SO_x$) and is thereby poisoned with sulfur.

The catalyst as disclosed in Japanese Laid-Open Patent Publication No. 52-122293 is not satisfactory for removing $NO_x$ from oxygen-rich exhaust gas emitted from diesel engines. In addition, the catalyst requires ammonia. Therefore, if it is used for reducing and removing $NO_x$ from exhaust gas emitted from mobile engines such as those in cars, the mobile engines must carry an ammonia bottle or the like therewith. In such a case, the control for supplying ammonia is complicated, and therefore the catalyst is not in practical use in cars.

## SUMMARY OF THE INVENTION

The object of the present invention is to provide an exhaust gas purifying catalyst capable of efficiently removing $NO_x$ from oxygen-rich exhaust gas, while inhibiting the formation of sulfites and sulfates, and to provide a method for purifying exhaust gas with the catalyst.

To attain the above-mentioned object, the present invention provides an exhaust gas purifying catalyst for removing at least nitrogen oxides from oxygen-rich exhaust gas which contains oxygen not less than the amount of oxygen necessary for oxidizing the components to be oxidized in the exhaust gas, the catalyst comprising;

a composite oxide support that comprises at least two elements selected from titanium (Ti), zirconium (Zr) and silicon (Si), and
a noble metal loaded on said composite oxide support.

To attain the object, the present invention also provides an exhaust gas purifying method for removing at least nitrogen oxides from oxygen-rich exhaust gas which contains oxygen not less than the amount of oxygen necessary for oxidizing the components to be oxidized in the exhaust gas, the method comprising the steps of;

adding gas oil as a reducing agent to said exhaust gas, and
bringing an exhaust gas purifying catalyst into contact with said exhaust gas, said exhaust gas purifying catalyst comprising a composite oxide support that comprises at least two elements selected from titanium (Ti), zirconium (Zr) and silicon (Si), and a noble metal loaded on said composite oxide support, thereby removing nitrogen oxides from said exhaust gas.

The composite oxide support used in the exhaust gas purifying catalyst and the exhaust gas purifying method of the present invention has more acid points than ordinary supports such as alumina. Therefore, the former adsorbs $NO_x$ on its acid points, and the thus-adsorbed $NO_x$ is reacted with the reducing agent added through the catalytic action of the noble metal in the catalyst. Using the catalyst of the invention and according to the method of the invention, therefore, $NO_x$ can be efficiently reduced and removed from exhaust gas.

In addition, the catalyst of the invention is advantageous in that it is not poisoned with sulfur to lower its $NO_x$ conversion ability.

Preferably, the composite oxide support that constitutes the exhaust gas purifying catalyst of the present invention, which is used in the exhaust gas purifying method of the invention, further loads an additional first catalyst component of at least one selected from the group consisting of iron (Fe), manganese (Mn), cerium (Ce) and niobium (Nb), and an additional second catalyst component of at least one selected from the group consisting of alkali metals and alkaline earth metals. These additional catalyst components may act to inhibit the oxidation of $SO_2$ that may cause the formation of sulfites or sulfates. These may further act to prevent the support from being poisoned by $SO_x$.

Further, since the composite oxide support used in the present invention more poorly adsorbs $SO_x$ than alumina, the formation of sulfites or sulfates, which is caused by the oxidation of $SO_x$, is prevented on the former.

The above and other objects, features and advantages of the present invention will become more apparent from the following description when taken in conjunction with the accompanying drawings in which a preferred embodiment of the invention is shown by way of illustrative example.

## BRIEF DESCRIPTION OF THE DRAWING

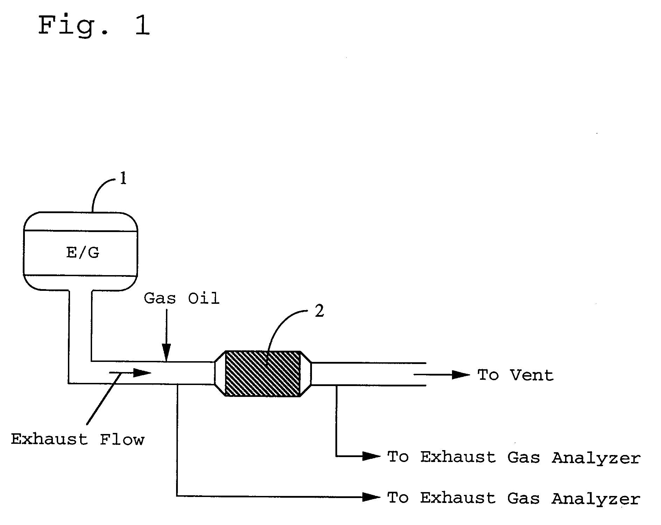

Fig. 1 is an explanatory view graphically showing the method for obtaining the $NO_x$ conversion ratio in exhaust gas in a diesel combustion system, which is employed in the examples of the invention mentioned hereinunder.

## DETAILED DESCRIPTION OF THE INVENTION

The exhaust gas purifying catalyst of the present invention is composed of a composite oxide support comprising at least two elements selected from Ti, Zr and Si, and a noble metal loaded on the composite oxide support. The composite oxide support has more acid points than conventional porous supports such as alumina. It is presumed that the support may adsorb $NO_x$ on its acid points, which $NO_x$ is then reacted with the reducing agent added through the catalytic action of the noble metal in the catalyst, thereby being reduced and removed. As a result of this, the catalyst of the invention can purify even oxygen-rich exhaust gas, while exhibiting the high conversion ratio of $NO_x$.

The composite oxide support may be selected from binary systems of Ti-Zr, Ti-Si and Zr-Si and a ternary system of Ti-Zr-Si. Regarding the proportions of the components constituting the support, it is desirable that Zr is from 0.2 to 5 mols, per mol of Ti, for the binary system of Ti-Zr. If Zr is less than 0.2 mols, the $NO_x$ conversion ratio of the catalyst is lowered. If it is more than 5 mols, the $NO_x$ conversion capacity of the catalyst is saturated and is therefore no more increased. For the binary system of Ti-Si, it is desirable that Si is from 0.5 to 3 mols, per mol of Ti. If Si is less than 0.5 mols, the $NO_x$ conversion ratio of the catalyst is lowered. If it is more than 3 mols, the $NO_x$ conversion capacity of the catalyst is no more increased. For the binary system of Zr-Si, it is desirable that Si is from 0.2 to 3 mols, per mol of Zr. If Si is less than 0.2 mols, the $NO_x$ conversion ratio of the catalyst is lowered. If it is more than 3 mols, the $NO_x$ conversion capacity of the catalyst is no more increased. For the ternary system of Ti-Zr-Si, it is desirable that Zr is from 1 to 4 mols and Si is from 0.1 to 1 mol, per mol of Ti, for the same reasons as above.

The noble metal constituting the catalyst of the present invention may be at least one of platinum (Pt), rhodium (Rh), palladium (Pd) and iridium (Ir). Of these, preferred is Pt as having especially high purifying activity. The amount of the noble metal loaded on the composite oxide support may be preferably from 0.05 to 10 g, per 100 g of the support. If the amount is less than 0.05 g, the catalyst has almost no catalytic activity. If it is more than 10 g, the catalytic activity of the catalyst is saturated and the cost of the catalyst disadvantageously increases. Especially preferable amount is from 1 to 8 g.

As in the invention as claimed in claims 2 and 9, it is desirable that an additional first catalytic component of at least one selected from the group consisting of Fe, Mn, Ce and Nb, and an additional second catalyst component of at least one selected from the group consisting of alkali metals and alkaline earth metals are further loaded on the composite oxide support. Though their effects are not clarified, these additional catalyst components have some catalytic activity, which, however, is inferior to the catalytic activity of the noble metal. In addition, the support is enhanced in the ability to adsorb $NO_x$ by loading these additional catalyst components. Moreover, it is presumed that these additional catalyst components may augment the selective purifying activity of the noble metal, resulting in the increase in the $NO_x$ conversion ratio of the catalyst.

It is desirable that the total amount of the first catalyst component to be additionally loaded on the composite oxide support is within the range of from 0.05 to 5 % by weight, with respect to the weight of the support. If it is less than 0.05 % by weight, the component could not exhibit its effect. If, however, it is more than 5 % by weight, the activity of the noble metal constituting the catalyst is lowered, though the $NO_x$-absorbing ability of the support is increased, resulting in the decrease in the $NO_x$ conversion ratio of the catalyst. Especially preferable amount is within the range of from 0.08 to 3 % by weight.

It Is preferable that the additional first catalyst component comprises a combination of Fe and Ce. This combination is advantageous in that the thermal stability of the exhaust gas purifying catalyst of the present invention is improved, and that the activity of the noble metal constituting the catalyst is prevented from being lowered. In this combination, the molar ratio of Fe to Ce, Fe/Ce, is preferably from 1/1 to 15/1.

It is desirable that the total amount of the second catalyst component to be additionally loaded on the composite oxide support is within the range of from 0.001 to 5 % by weight, with respect to the weight of the support. If it is less than 0.001 % by weight, the component could not exhibit its effect. If, however, it is more than 5 % by weight, the activity of the noble metal constituting the catalyst is lowered, though the $NO_x$-absorbing ability of the support is increased, resulting in the decrease in the $NO_x$ conversion ratio of the catalyst. Especially preferable amount is within the range of from 0.05 to 2 % by weight.

The additional second catalyst component may comprise an alkali metal selected from lithium (Li), sodium (Na), potassium (K), rubidium (Rb), cesium (Cs) and francium (Fr), or an alkaline earth metal selected from calcium (Ca), strontium (Sr) and barium (Ba). Of these, preferred is a combination of K and Ca. This combination is more effective for inhibiting the formation of sulfites or sulfates. In this combination, the molar ratio of K to Ca, K/Ca, is preferably from 1/1 to 10/1.

The first and second catalyst components may be loaded on the composite oxide support in any forms of metals, salts, oxides, hydroxides and others. The components may either be merely loaded on the support or constitute additional composite oxides to load on the support. In addition, it is also possible to load any additional composite oxide composed of the first and second catalyst components on the support.

Regarding the reducing agent to be added, it is simplest to use gas oil which is fuel for diesel engines. As in the invention as claimed in claim 13, propylene is also preferably used. Since propylene has a higher diffusing speed into the surface of the catalyst and a higher reactivity on the surface of the catalyst than gas oil, it may be preferably used to thereby further increase the $NO_x$ conversion ratio of the catalyst.

DESCRIPTION OF PREFERRED EMBODIMENTS OF THE INVENTION

Now, the present invention is described in more detail hereinunder with reference to the following examples and comparative examples.

Example 1:

(1) Preparation of Composite Oxide Support:

A predetermined amount of titanium tetrachloride ($TiCl_4$) and a predetermined amount of zirconium oxychloride ($ZrCl_2O \cdot 8H_2O$) were gradually dropped into 300 ml of water while cooling with ice and while stirring. The resulting mixture was kept at about 30°C, into which aqueous 25 % ammonia was gradually dropped, while fully stirring, until the pH of the mixture reached 7. After this, the mixture was aged overnight.

The gel thus formed was filtered, washed with water, dried at 120°C for 10 hours, then again washed with water, and thereafter calcined in air at 500°C for 3 hours. In the Ti-Zr composite oxide support thus obtained, the molar ratio of Ti to Zr, Ti/Zr, was 1/3.

(2) Preparation of Catalyst:

The Ti-Zr composite oxide support prepared in the above was dipped in a predetermined amount of an aqueous solution of Pt salt ("Diammine dinitro platinum (II) nitric acid solution", produced by Tanaka Noble Metal Co.) having a predetermined Pt concentration, then dried through vaporization, and then calcined in air at 450°C for 2 hours, whereby Pt was loaded on the support. The resulting catalyst powder was shaped under pressure to give catalyst pellets having sizes of from 1 to 2 mm. The Pt amount in the catalyst pellets was 2g per liter of the Ti-Zr composite oxide support, and was 1.65 % by weight with respect to the weight of the catalyst pellets.

(3) Evaluation of Activity of Catalyst:

Using a model gas having the composition shown in Table 1 below, the $NO_x$ conversion ratio of the catalyst prepared in the above was obtained according to the temperature-lowering method (temperature lowered from 500°C to 150°C at a cooling rate of 5°C/min), at SV of 100,000 $hr^{-1}$. Propylene was used as THC. The $NO_x$ concentration and the $SO_2$ concentration in the gas were analytically measured before and after the gas was passing through the catalyst bed, using MEXA (motor exhaust gas analyzer). From the data thus measured, obtained were the $NO_x$ and $SO_2$ conversion ratios at 250°C, according to the following equations. The results obtained are shown in Table 2 below.

$$NO_x \text{ Conversion Ratio (\%)} = [\{(NO_x \text{ concentration in inlet gas}) - (NO_x$$

$$\text{concentration in outlet gas})\}/(NO_x \text{ concentration in inlet gas})] \times 100$$

$$SO_2 \text{ Conversion Ratio (\%)} = [\{(SO_2 \text{ concentration in inlet gas}) - (SO_2$$

$$\text{concentration in outlet gas})\}/(SO_2 \text{ concentration in inlet gas})] \times 100$$

Table 1

| Components Constituting Model Gas | NO ppm | $O_2$ % | THC ppmC | CO ppm | $CO_2$ % | $SO_2$ % | $H_2O$ % | $N_2$ |
|---|---|---|---|---|---|---|---|---|
| Concentration | 230 | 10 | 3000 | 150 | 6.7 | 25 | 5 | Balance |

Example 2:

Catalyst pellets of Example 2 were prepared in the same manner as in Example 1, except that the loading amount of Pt was 8 g per liter of the support, and the activity of the catalyst was evaluated also in the same manner as in Example 1. The results obtained are shown in Table 2.

Example 3:

Catalyst pellets of Example 3 were prepared in the same manner as in Example 1, except that the loading amount of Pt was 10 g per liter of the support, and the activity of the catalyst was evaluated also in the same manner as in Example 1. The results obtained are shown in Table 2.

Example 4:

In the same manner as in Example 1, Pt was loaded on the Ti-Zr composite oxide support as prepared in the same manner as in Example 1. The thus Pt-loading Ti-Zr composite oxide support was further dipped in a predetermined amount of an aqueous solution of iron nitrate, and then dried through vaporization, whereby Fe was additionally loaded on the support. The support was still further dipped in a predetermined amount of an aqueous solution of potassium nitrate, and then dried through vaporization, whereby K was still additionally loaded on the support. The loading amounts of the additional metals were 0.2 g of Fe and 0.1 g of K per liter of the support.

Next, in the same manner as in Example 1, catalyst pellets of Example 4 were prepared herein, and the activity thereof was evaluated. The results obtained are shown in Table 2.

Example 5:

Catalyst pellets of Example 5 were prepared in the same manner as in Example 1, except that the molar ratio of Ti to Zr, Ti/Zr, in the Ti-Zr composite oxide support was 1/1, and the activity of the catalyst was evaluated also in the same manner as in Example 1. The results obtained are shown in Table 2.

Example 6:

Catalyst pellets of Example 6 were prepared in the same manner as in Example 1, except that the molar ratio of Ti to Zr, Ti/Zr, in the Ti-Zr composite oxide support was 1/1 and that the loading amount of Pt was 8 g per liter of the support, and the activity of the catalyst was evaluated also in the same manner as in Example 1. The results obtained are shown in Table 2.

Example 7:

Catalyst pellets of Example 7 were prepared in the same manner as in Example 1, except that the molar ratio of Ti to Zr, Ti/Zr, in the Ti-Zr composite oxide support was 3/1, and the activity of the catalyst was evaluated also in the same manner as in Example 1. The results obtained are shown in Table 2.

Example 8:

Catalyst pellets of Example 8 were prepared in the same manner as in Example 1, except that the molar ratio of Ti to Zr, Ti/Zr, in the Ti-Zr composite oxide support was 3/1 and that the loading amount of Pt was 8 g per liter of the support, and the activity of the catalyst was evaluated also in the same manner as in Example 1. The results obtained are shown in Table 2.

Example 9:

Catalyst pellets of Example 9 were prepared in the same manner as in Example 1, except that the same amount of Pd was loaded on the support in place of Pt, and the activity of the catalyst was evaluated also in the same manner as in Example 1. The results obtained are shown in Table 2.

Example 10:

Catalyst pellets of Example 10 were prepared in the same manner as in Example 1, except that the Ti-Zr composite oxide support loaded 8 g, per liter of the support, of Pd in place of Pt, and the activity of the catalyst was evaluated also in the same manner as in Example 1. The results obtained are shown in Table 2.

Example 11:

The Pt-loading catalyst powder as prepared in Example 1 was dipped in an aqueous solution of rhodium nitrate having a predetermined rhodium nitrate concentration. Then, this was dried through vaporization, whereby Rh was loaded on the catalyst. Next, the resulting catalyst was dipped in a predetermined amount of an aqueous solution of iridium nitrate, and then dried through vaporization, whereby Ir was further loaded on the catalyst. The loading amounts of the noble metals were 1 g of Rh and 1 g of Ir per liter of the Ti-Zr composite oxide support.

Next, in the same manner as in Example 1, catalyst pellets of Example 11 were prepared herein, and the activity thereof was evaluated. The results obtained are shown in Table 2.

Example 12:

In the same manner as in Example 1, Pt was loaded on the Ti-Zr composite oxide support as prepared in the same manner as in Example 1. The thus Pt-loading Ti-Zr composite oxide support was further dipped in a predetermined amount of an aqueous solution of iron nitrate, and then dried through vaporization, whereby Fe was additionally loaded on the support. The support was still further dipped in a predetermined amount of an aqueous solution of potassium nitrate, and then dried through vaporization, whereby K was still additionally loaded on the support. The loading amounts of the additional metals were 5 g of Fe and 1 g of K per liter of the support.

Next, in the same manner as in Example 1, catalyst pellets of Example 12 were prepared herein, and the activity thereof was evaluated. The results obtained are shown in Table 2.

Example 13:

In the same manner as in Example 1, Pt was loaded on the Ti-Zr composite oxide support as prepared in the same manner as in Example 1. The thus Pt-loading Ti-Zr composite oxide support was further dipped in a predetermined amount of an aqueous solution of iron nitrate, and then dried through vaporization, whereby Fe was additionally loaded on the support. The support was still further dipped in a predetermined amount of an aqueous solution of cesium nitrate, and then dried through vaporization, whereby Cs was still additionally loaded on the support. The loading amounts of the additional metals were 0.2 g of Fe and 3 g of Cs per liter of the support.

Next, in the same manner as in Example 1, catalyst pellets of Example 13 were prepared herein, and the activity thereof was evaluated. The results obtained are shown in Table 2.

Example 14:

A Ti-Zr composite oxide support was prepared in the same manner as in Example 1, except that the molar ratio of Ti to Zr, Ti/Zr, was 1/1. Pt was loaded on this in the same manner as in Example 1, except that the loading amount of Pt was 8 g per litter of the support. The thus Pt-loading Ti-Zr composite oxide support was further dipped in a predetermined amount of an aqueous solution of iron nitrate, and then dried through vaporization, whereby Fe was additionally loaded on the support. The support was still further dipped in a predetermined amount of an aqueous solution of calcium nitrate, and then dried through vaporization, whereby Ca was still additionally loaded on the support. The loading amounts of the additional metals were 0.2 g of Fe and 0.1 g of Ca per liter of the support.

Next, in the same manner as in Example 1, catalyst pellets of Example 14 were prepared herein, and the activity thereof was evaluated. The results obtained are shown in Table 2.

Example 15:

A Ti-Zr composite oxide support was prepared in the same manner as in Example 1, except that the molar ratio of Ti to Zr, Ti/Zr, was 1/1. Pt was loaded on this in the same manner as in Example 1, except that the loading amount of Pt was 8 g per liter of the support. The Pt-loading catalyst powder thus prepared herein in the same manner as in Example 1 was dipped in an aqueous solution of rhodium nitrate having a predetermined rhodium nitrate concentration. Then, this was dried through vaporization, whereby Rh was loaded on the catalyst. Next, the resulting catalyst was dipped in a predetermined amount of an aqueous solution of iridium nitrate, and then dried through vaporization, whereby Ir was further loaded on the catalyst. The loading amounts of the noble metals were 1 g of Rh and 1 g of Ir per liter of the Ti-Zr composite oxide support.

Next, in the same manner as in Example 1, catalyst pellets of Example 15 were prepared herein, and the activity thereof was evaluated. The results obtained are shown in Table 2.

Example 16:

A Ti-Zr composite oxide support was prepared in the same manner as in Example 1, except that the molar ratio of Ti to Zr, Ti/Zr, was 1/1. Pt was loaded on this in the same manner as in Example 1, except that the loading amount of Pt was 8 g per litter of the support. The thus Pt-loading Ti-Zr composite oxide support was further dipped in a predetermined amount of an aqueous solution of iron nitrate, and then dried through vaporization, whereby Fe was additionally loaded on the support. The support was still further dipped in a predetermined amount of an aqueous solution of potassium nitrate, and then dried through vaporization, whereby K was still additionally loaded on the support. The loading amounts of the additional metals were 5 g of Fe and 1 g of K per liter of the support.

Next, in the same manner as in Example 1, catalyst pellets of Example 16 were prepared herein, and the activity thereof was evaluated. The results obtained are shown in Table 2.

Example 17:

In the same manner as in Example 1, Pt was loaded on the Ti-Zr composite oxide support as prepared in the same manner as in Example 1. The thus Pt-loading Ti-Zr composite oxide support was further dipped in a predetermined amount of an aqueous solution of iron nitrate, and then dried through vaporization, whereby Fe was additionally loaded on the support. The support was still further dipped in a predetermined amount of an aqueous solution of calcium nitrate, and then dried through vaporization, whereby Ca was still additionally loaded on the support. The loading amounts of the additional metals were 0.2 g of Fe and 0.1 g of Ca per liter of the support.

Next, in the same manner as in Example 1, catalyst pellets of Example 17 were prepared herein, and the activity thereof was evaluated. The results obtained are shown in Table 2.

Example 18:

In the same manner as in Example 1, Pt was loaded on the Ti-Zr composite oxide support as prepared in the same manner as in Example 1, except that the loading amount of Pt was 8 g per liter of the support. The thus Pt-loading Ti-Zr composite oxide support was further dipped in a predetermined amount of an aqueous solution of iron nitrate, and then dried through vaporization, whereby Fe was additionally loaded on support. The support was still further dipped in a predetermined amount of an aqueous solution of calcium nitrate, and then dried through vaporization, whereby Ca was still additionally loaded on the support. The loading amounts of the additional metals were 0.2 g of Fe and 0.1 g of Ca per liter of the support.

Next, in the same manner as in Example 1, catalyst pellets of Example 18 were prepared herein, and the activity thereof was evaluated. The results obtained are shown in Table 2.

Example 19:

In the same manner as in Example 1, Pt was loaded on the Ti-Zr composite oxide support as prepared in the same manner as in Example 1. The thus Pt-loading Ti-Zr composite oxide support was further dipped in a predetermined amount of an aqueous solution of manganese nitrate, and then dried through vaporization, whereby Mn was additionally loaded on the support. The support was still further dipped in a predetermined amount of an aqueous solution of potassium nitrate, and then dried through vaporization, whereby K was still additionally loaded on the support. The loading amounts of the additional metals were 0.2 g of Mn and 0.1 g of K per liter of the support.

Next, in the same manner as in Example 1, catalyst pellets of Example 19 were prepared herein, and the activity thereof was evaluated. The results obtained are shown in Table 2.

Example 20:

In the same manner as in Example 1, Pt was loaded on the Ti-Zr composite oxide support as prepared in the same manner as in Example 1. The thus Pt-loading Ti-Zr composite oxide support was further dipped in a predetermined amount of an aqueous solution of niobium nitrate, and then dried through vaporization, whereby Nb was additionally loaded on the support. The support was still further dipped in a predetermined amount of an aqueous solution of potassium nitrate, and then dried through vaporization, whereby K was still additionally loaded on the support. The loading amounts of the additional metals were 1 g of Nb and 0.4 g of K per liter of the support.

Next, in the same manner as in Example 1, catalyst pellets of Example 20 were prepared herein, and the activity thereof was evaluated. The results obtained are shown in Table 2.

Example 21:

A Ti-Zr-Si composite oxide support was prepared in the same manner as in Example 1, except that a predetermined amount of titanium tetrachloride ($TiCl_4$), a predetermined amount of zirconium oxychloride ($ZrCl_2O \cdot 8H_2O$) and a predetermined amount of ethyl orthotetrasilicate ($Si(OC_2H_5)_4$) were used herein. The molar ratio of Ti to Zr to Si, Ti/Zr/Si, in the Ti-Zr-Si composite oxide support prepared herein was 0.3/0.6/0.1.

Next, Pt was loaded on the support in the same manner as in Example 1. Using this, catalyst pellets of Example 21 were prepared in the same manner as in Example 1. The activity of the catalyst was evaluated also in the same manner as in Example 1. The results obtained are shown in Table 2.

Example 22:

A Ti-Zr-Si composite oxide support was prepared in the same manner as in Example 1, except that a predetermined amount of titanium tetrachloride ($TiCl_4$), a predetermined amount of zirconium oxychloride ($ZrCl_2O \cdot 8H_2O$) and

a predetermined amount of ethyl orthotetrasilicate (Si(OC$_2$H$_5$)$_4$) were used herein. The molar ratio of Ti to Zr to Si, Ti/Zr/Si, in the Ti-Zr-Si composite oxide support prepared herein was 0.3/0.6/0.1.

Pt was loaded on the Ti-Zr-Si composite oxide support in the same manner as in Example 1. Next, the thus Pt-loading Ti-Zr-Si composite oxide support was further dipped in a predetermined amount of an aqueous solution of iron nitrate, and then dried through vaporization, whereby Fe was additionally loaded on the support. The support was still further dipped in a predetermined amount of an aqueous solution of potassium nitrate, and then dried through vaporization, whereby K was still additionally loaded on the support. The loading amounts of the additional metals were 0.2 g of Fe and 0.1 g of K per liter of the support.

Next, in the same manner as in Example 1, catalyst pellets of Example 22 were prepared herein, and the activity thereof was evaluated. The results obtained are shown in Table 2.

Example 23:

A Ti-Zr-Si composite oxide support was prepared in the same manner as in Example 1, except that a predetermined amount of titanium tetrachloride (TiCl$_4$), a predetermined amount of zirconium oxychloride (ZrCl$_2$O · 8H$_2$O) and a predetermined amount of ethyl orthotetrasilicate (Si(OC$_2$H$_5$)$_4$) were used herein. The molar ratio of Ti to Zr to Si, Ti/Zr/Si, in the Ti-Zr-Si composite oxide support prepared herein was 0.4/0.4/0.2.

Pt was loaded on the Ti-Zr-Si composite oxide support in the same manner as in Example 1. Using this, catalyst pellets of Example 23 were prepared in the same manner as in Example 1, and the activity thereof was evaluated. The results obtained are shown in Table 2.

Example 24:

A Ti-Zr-Si composite oxide support was prepared in the same manner as in Example 1, except that a predetermined amount of titanium tetrachloride (TiCl$_4$), a predetermined amount of zirconium oxychloride (ZrCl$_2$O · 8H$_2$O) and a predetermined amount of ethyl orthotetrasilicate (Si(OC$_2$H$_5$)$_4$) were used herein. The molar ratio of Ti to Zr to Si, Ti/Zr/Si, in the Ti-Zr-Si composite oxide support prepared herein was 0.4/0.4/0.2.

Pt was loaded on the Ti-Zr-Si composite oxide support in the same manner as in Example 1. Next, the thus Pt-loading Ti-Zr-Si composite oxide support was further dipped in a predetermined amount of an aqueous solution of iron nitrate, and then dried through vaporization, whereby Fe was additionally loaded on the support. The support was still further dipped in a predetermined amount of an aqueous solution of potassium nitrate, and then dried through vaporisation, whereby K was still additionally loaded on the support. The loading amounts of the additional metals were 0.2 g of Fe and 0.1 g of K per liter of the support.

Next, in the same manner as in Example 1, catalyst pellets of Example 24 were prepared herein, and the activity thereof was evaluated. The results obtained are shown in Table 2.

Example 25:

In the same manner as in Example 1, Pt was loaded on the Ti-Zr composite oxide support as prepared in the same manner as in Example 1. The thus Pt-loading Ti-Zr composite oxide support was further dipped in a predetermined amount of an aqueous solution of iron nitrate, and then dried through vaporization, whereby Fe was additionally loaded on the support. The support was still further dipped in a predetermined amount of an aqueous solution of cerium nitrate, and then dried through vaporization, whereby Ce was still additionally loaded on the support. This was still further dipped in a predetermined amount of an aqueous solution of potassium nitrate, and then dried through vaporization, whereby K was still additionally loaded on the support. The loading amounts of the additional metals were 0.2 g of Fe, 0.2 g of Ce and 0.1 g of K per liter of the support.

Next, in the same manner as in Example 1, catalyst pellets of Example 25 were prepared herein, and the activity thereof was evaluated. The results obtained are shown in Table 2.

Example 26:

In the same manner as in Example 1, Pt was loaded on the Ti-Zr composite oxide support as prepared in the same manner as in Example 1. The thus Pt-loading Ti-Zr composite oxide support was further dipped in a predetermined amount of an aqueous solution of iron nitrate, and then dried through vaporization, whereby Fe was additionally loaded on the support. The support was still further dipped in a predetermined amount of an aqueous solution of cerium nitrate, and then dried through vaporization, whereby Ce was still additionally loaded on the support. This was still further dipped in a predetermined amount of an aqueous solution of potassium nitrate, and then dried through vaporization, whereby K was still additionally loaded on the support. This was still further dipped in a predetermined amount of an aqueous solution of calcium nitrate, and then dried through vaporization, whereby Ca was still additionally loaded on the support. The loading amounts of the additional metals were 0.2 g of Fe, 0.2 g of Ce, 0.1 g of K and 0.1 g of Ca per liter of the support.

Next, in the same manner as in Example 1, catalyst pellets of Example 26 were prepared herein, and the activity thereof was evaluated. The results obtained are shown in Table 2.

Example 27:

In the same manner as in Example 1, Pt was loaded on the Ti-Zr composite oxide support as prepared in the same manner as in Example 1. The thus Pt-loading Ti-Zr composite oxide support was further dipped in a predetermined amount of an aqueous solution of iron nitrate, and then dried through vaporization, whereby Fe was additionally loaded on the support. The support was still further dipped in a predetermined amount of an aqueous solution of cerium nitrate, and then dried through vaporization, whereby Ce was still additionally loaded on the support. This was still further dipped in a predetermined amount of an aqueous solution of potassium nitrate, and then dried through vaporization, whereby K was still additionally loaded on the support. This was still further dipped in a predetermined amount of an aqueous solution of calcium nitrate, and then dried through vaporization, whereby Ca was still additionally loaded on the support. The loading amounts of the additional metals were 0.2 g of Fe, 0.2 g of Ce, 1 g of K and 0.1 g of Ca per liter of the support.

Next, in the same manner as in Example 1, catalyst pellets of Example 27 were prepared herein, and the activity thereof was evaluated. The results obtained are shown in Table 2.

Comparative Example 1:

A Ti oxide support was prepared in the same manner as in Example 1, except that only titanium tetrachloride ($TiCl_4$) was used. Using this Ti oxide support, catalysts pellets of Comparative Example 1 were prepared in the same manner as in Example 1, and the activity thereof was evaluated. The results obtained are shown in Table 2.

Comparative Example 2:

A Ti oxide support was prepared in the same manner as in Example 1, except that only titanium tetrachloride ($TiCl_4$) was used. Pt was loaded on this Ti oxide support in the same manner as in Example 1, except that the loading amount of Pt was 8 g per liter of the support. Using the thus Pt-loading Ti oxide support prepared herein, catalysts pellets of Comparative Example 2 were prepared in the same manner as in Example 1, and the activity thereof was evaluated. The results obtained are shown in Table 2.

Comparative Example 3:

A Zr oxide support was prepared in the same manner as in Example 1, except that only zirconium oxychloride ($ZrCl_2O \cdot 8H_2O$) was used. Using this Zr oxide support, catalysts pellets of Comparative Example 3 were prepared in the same manner as in Example 1, and the activity thereof was evaluated. The results obtained are shown in Table 2.

Comparative Example 4:

A Zr oxide support was prepared in the same manner as in Example 1, except that only zirconium oxychloride ($ZrCl_2O \cdot 8H_2O$) was used. Pt was loaded on this Zr oxide support in the same manner as in Example 1, except that the loading amount of Pt was 8 g per liter of the support. Using the thus Pt-loading Zr oxide support prepared herein, catalysts pellets of Comparative Example 4 were prepared in the same manner as in Example 1, and the activity thereof was evaluated. The results obtained are shown in Table 2.

Table 2

| | Composite Oxide Support (mol%) | | | Amount of Metal Loaded (wt. %) | | | | | | | | | | | Nox Conversion Ratio (%) | SO$_2$ Conversion Ratio (%) |
|---|---|---|---|---|---|---|---|---|---|---|---|---|---|---|---|---|
| | TiO$_2$ | ZrO$_2$ | SiO$_2$ | Pt | Rh | Pd | Ir | Fe | Mn | Ce | Nb | K | Cs | Ca | | |
| Ex.1 | 25 | 75 | | 1.7 | | | | | | | | | | | 80 | 78 |
| Ex.2 | 25 | 75 | | 8 | | | | | | | | | | | 85 | 83 |
| Ex.3 | 25 | 75 | | 10 | | | | | | | | | | | 75 | 90 |
| Ex.4 | 25 | 75 | | 1.7 | | | | 0.2 | | | | 0.1 | | | 72 | 60 |
| Ex.5 | 50 | 50 | | 1.7 | | | | | | | | | | | 66 | 75 |
| Ex.6 | 50 | 50 | | 8 | | | | | | | | | | | 82 | 80 |
| Ex.7 | 75 | 25 | | 1.7 | | | | | | | | | | | 53 | 60 |
| Ex.8 | 75 | 25 | | 8 | | | | | | | | | | | 70 | 70 |
| Ex.9 | 25 | 75 | | | | 1.7 | | | | | | | | | 60 | 70 |
| Ex.10 | 25 | 75 | | | | 8 | | | | | | | | | 72 | 80 |
| Ex.11 | 25 | 75 | | 1.7 | 1 | | 1 | | | | | | | | 70 | 78 |
| Ex.12 | 25 | 75 | | 1.7 | | | | 5 | | | | 1 | | | 60 | 50 |
| Ex.13 | 25 | 75 | | 1.7 | | | | 0.2 | | | | | 3 | | 65 | 67 |
| Ex.14 | 50 | 50 | | 8 | | | | 0.2 | | | | | | 0.1 | 74 | 65 |
| Ex.15 | 50 | 50 | | 8 | 1 | | 1 | | | | | | | | 72 | 80 |
| Ex.16 | 50 | 50 | | 8 | | | | 5 | | | | 1 | | | 65 | 60 |
| Ex.17 | 25 | 75 | | 1.7 | | | | 0.2 | | | | | | 0.1 | 68 | 69 |
| Ex.18 | 25 | 75 | | 8 | | | | 0.2 | | | | | | 0.1 | 78 | 71 |

EP 0 786 285 A2

| | Composite Oxide Support [mol%] | | | Amount of Metal Loaded [wt. %] | | | | | | | | | | | Nox Conversion Ratio [%] | SO2 Conversion Ratio [%] |
|---|---|---|---|---|---|---|---|---|---|---|---|---|---|---|---|---|---|
| | TiO2 | ZrO2 | SiO2 | Pt | Rh | Pd | Ir | Fe | Mn | Ce | Nb | K | Cs | Ca | | |
| Ex.19 | 25 | 75 | | 1.7 | | | | | 0.2 | | | 0.1 | | | 70 | 62 |
| Ex.20 | 25 | 75 | | 1.7 | | | | | | | 1 | 0.4 | | | 68 | 58 |
| Ex.21 | 30 | 60 | 10 | 1.7 | | | | | | | | | | | 78 | 79 |
| Ex.22 | 30 | 60 | 10 | 1.7 | | | | 0.2 | | | | 0.1 | | | 70 | 62 |
| Ex.23 | 40 | 40 | 20 | 1.7 | | | | | | | | | | | 73 | 72 |
| Ex.24 | 40 | 40 | 20 | 1.7 | | | | 0.2 | | | | | | | 70 | 65 |
| Ex.25 | 25 | 75 | | 1.7 | | | | 0.2 | | 0.2 | | 0.1 | | | 68 | 56 |
| Ex.26 | 25 | 75 | | 1.7 | | | | 0.2 | | 0.2 | | 0.1 | | 0.1 | 65 | 50 |
| Ex.27 | 25 | 75 | | 1.7 | | | | 0.2 | | 0.2 | | 1 | | 0.1 | 60 | 45 |
| Comp. Ex.1 | 100 | | | | | | | | | | | | | | 46 | 40 |
| Comp. Ex.2 | 100 | | | 8 | | | | | | | | | | | 60 | 70 |
| Comp. Ex.3 | | 100 | | | | | | | | | | | | | 50 | 70 |
| Comp. Ex.4 | | 100 | | 8 | | | | | | | | | | | 62 | 90 |

Comparing the catalysts of the examples of the invention with those of the comparative examples having the same loading amount of the noble metal, as in Table 2, it is known that the former exhibited the higher $NO_x$ conversion ratio than the latter. From this, it is understood that the composite oxide supports in the former brought about the increase in

the $NO_x$ conversion ratio. It is also understood from the results in Table 2 that the catalysts of the examples of the invention that load the additional first and second catalyst components on the support resulted in the decrease in the $SO_2$ conversion ratio.

Comparing the catalyst of Example 24 with that of Example 25, it is known that the latter comprising both Fe and Ce resulted in a greater decrease in the $SO_2$ conversion ratio, while the both resulted in almost the same $NO_x$ conversion ratio. From this, it is understood that the activity of the noble metal in the latter, the catalyst of Example 25 was more improved than that in the former. Comparing the catalyst of Example 25 and that of Example 26, it is obvious that the addition of the second catalyst component comprising K and Ca resulted in further improvement in the ability of the catalyst to inhibit the formation of sulfites or sulfates.

Example 28:

A catalyst 2 comprising the catalyst pellets of Example 1 was connected to a 2400 cc-diesel engine 1 via an exhaust pipe, as in Fig. 1, which was driven at SV of 60,000 $hr^{-1}$ and at a catalyst bed temperature of from 150 to 450°C, while applying gas oil to the upstream side of the catalyst bed in an amount of 2000 ppmC in terms of the carbon concentration thereof. The $NO_x$ conversion ratio in the exhaust gas emitted from the engine was obtained. The maximum $NO_x$ conversion ratio in the exhaust gas emitted and the $SO_2$ conversion ratio in the inlet gas of 250°C were obtained. The results obtained are shown in Table 3.

Example 29:

The catalyst pellets of Example 4 were used herein. In the same manner as in Example 28, the maximum $NO_x$ conversion ratio in the exhaust gas emitted and the $SO_2$ conversion ratio in the inlet gas of 250°C were obtained. The results obtained are shown in Table 3.

Comparative Examples 5 to 10:

Catalyst pellets of Comparative Examples 5 to 10 were prepared in the same manner as in Example 1, except that the supports as shown in Table 3 were used herein. Using any of these catalyst pellets prepared herein and in the same manner as in Example 28, the maximum $NO_x$ conversion ratio in the exhaust gas emitted and the $SO_2$ conversion ratio in the inlet gas of 250°C were obtained. The results obtained are shown in Table 3.

Table 3

|  | Support | Maximum NOx Conversion Ratio [%] | $SO_2$ Conversion Ratio [%] |
|---|---|---|---|
| Example 28 | Pt-TiO$_2$ · ZrO$_2$ | 53 | 15 |
| Example 29 | Pt-Fe-K-TiO$_2$ · ZrO$_2$ | 47 | 8 |
| Comparative Example 5 | Pt-Al$_2$O$_3$ | 23 | 30 |
| Comparative Example 6 | Pt-Mordenite | 42 | 39 |
| Comparative Example 7 | Pt-Zeolite-$\beta$ | 33 | 30 |
| Comparative Example 8 | Pt-Y-type Zeolite | 45 | 42 |
| Comparative Example 9 | Pt- [SiO$_2$+Al$_2$O$_3$] | 29 | 26 |
| Comparative Example 10 | Pt-SiO$_2$ | 18 | 15 |

Evaluation:

From Table 3 above, it is obvious that the use of the exhaust gas purifying catalyst of the present invention that comprises a composite oxide support results in the increase in the $NO_x$ conversion ratio in exhaust gas and in the improvement in the ability of the catalyst to inhibit the formation of sulfites or sulfates in exhaust gas even when gas oil is applied to the exhaust gas to be treated with the catalyst.

As has been described in detail hereinabove, using the exhaust gas purifying catalyst as claimed in claim 1 and the exhaust gas purifying method as claimed in claim 8 makes it possible to efficiently remove $NO_x$ from exhaust gas. In addition, in the catalyst of the invention, the support is prevented from being poisoned with sulfur. Moreover, using the exhaust gas purifying catalyst as claimed in claim 2 and according to the exhaust gas purifying method as claimed in claim 9, the $NO_x$ conversion ratio in exhaust gas is increased and the formation of sulfites or sulfates in the exhaust gas processed is effectively prevented.

**Claims**

1. An exhaust gas purifying catalyst for removing at least nitrogen oxides from oxygen-rich exhaust gas which contains oxygen not less than the amount of oxygen necessary for oxidizing the components to be oxidized in the exhaust gas, the catalyst comprising;

    a composite oxide support that comprises at least two elements selected from titanium (Ti), zirconium (Zr) and silicon (Si), and
    a noble metal loaded on said composite oxide support.

2. The exhaust gas purifying catalyst as claimed in claim 1, wherein said composite oxide support further loads an additional first catalyst component of at least one selected from the group consisting of iron (Fe), manganese (Mn), cerium (Ce) and niobium (Nb), and an additional second catalyst component of at least one selected from the group consisting of alkali metals and alkaline earth metals.

3. The exhaust gas purifying catalyst as claimed in claim 2, wherein said first catalyst component comprises iron (Fe) and cerium (Ce).

4. The exhaust gas purifying catalyst as claimed in claim 2 or 3, wherein the alkali metals for said second catalyst component include lithium (Li), sodium (Na), potassium (K), rubidium (Rb), cesium (Cs) and francium (Fr), and the alkaline earth metals for the same include calcium (Ca), strontium (Sr) and barium (Ba).

5. The exhaust gas purifying catalyst as claimed in claim 4, wherein said second catalyst component comprises potassium (K) and calcium (Ca).

6. The exhaust gas purifying catalyst as claimed in claim 1 or 2, wherein said composite oxide support comprises titanium (Ti) and zirconium (Zr) at a molar ratio of zirconium (Zr) to titanium (Ti), Zr/Ti, of from 0.2/1 to 5/1.

7. The exhaust gas purifying catalyst as claimed in claim 1 or 2, wherein said composite oxide support comprises titanium (Ti), zirconium (Zr) and silicon (Si) at a molar ratio of zirconium (Zr) to titanium (Ti), Zr/Ti, of from 1/1 to 4/1 and at a molar ratio of silicon (Si) to titanium (Ti), Si/Ti, of from 0.1/1 to 1/1.

8. An exhaust gas purifying method for removing at least nitrogen oxides from oxygen-rich exhaust gas which contains oxygen not less than the amount of oxygen necessary for oxidizing the components to be oxidized in the exhaust gas, the method comprising the steps of;

    adding gas oil as a reducing agent to said exhaust gas, and
    bringing an exhaust gas purifying catalyst into contact with said exhaust gas, said exhaust gas purifying catalyst comprising a composite oxide support that comprises at least two elements selected from titanium (Ti), zirconium (Zr) and silicon (Si), and a noble metal loaded on said composite oxide support, thereby removing nitrogen oxides from said exhaust gas.

9. The exhaust gas purifying method as claimed in claim 8, wherein said composite oxide support further loads an additional first catalyst component of at least one selected from the group consisting of iron (Fe), manganese (Mn), cerium (Ce) and niobium (Nb), and an additional second catalyst component of at least one selected from the group consisting of alkali metals and alkaline earth metals.

10. The exhaust gas purifying method as claimed in claim 9, wherein said first catalyst component of the catalyst comprises iron (Fe) and cerium (Ce).

11. The exhaust gas purifying method as claimed in claim 9 or 10, wherein the alkali metals for said second catalyst component of the catalyst include lithium (Li), sodium (Na), potassium (K), rubidium (Rb), cesium (Cs) and francium (Fr), and the alkaline earth metals for the same include calcium (Ca), strontium (Sr) and barium (Ba).

**12.** The exhaust gas purifying method as claimed in claim 11, wherein said second catalyst component of the catalyst comprises potassium (K) and calcium (Ca).

**13.** The exhaust gas purifying method as claimed in claim 9, wherein propylene is used as the reducing agent in place of gas oil.

**14.** The exhaust gas purifying method as claimed in claim 8 or 9, wherein said composite oxide support comprises titanium (Ti) and zirconium (Zr) at a molar ratio of zirconium (Zr) to titanium (Ti). Zr/Ti, of from 0.2/1 to 5/1.

**15.** The exhaust gas purifying method as claimed in claim 8 or 9, wherein said composite oxide support comprises titanium (Ti), zirconium (Zr) and silicon (Si) at a molar ratio of zirconium (Zr) to titanium (Ti), Zr/Ti, of from 1/1 to 4/1 and at a molar ratio of silicon (Si) to titanium (Ti), Si/Ti, of from 0.1/1 to 1/1.

# Fig. 1

E/G

1

Gas Oil

2

Exhaust Flow

To Vent

To Exhaust Gas Analyzer

To Exhaust Gas Analyzer